# EUROPEAN PATENT APPLICATION

(11) **EP 4 699 901 A1**
(43) Date of publication of application: **25.02.2026**
(21) Application number: 24791841.0
(22) Date of filing: 29.03.2024
(51) Int. Cl.: B62D 21/02

(54) **VEHICLE**

(30) Priority: 18.04.2023 CN 202310460238
(71) Applicant: BYD Company Limited, Shenzhen, Guangdong 518118 (CN)
(72) Inventor: LI, Yan, Shenzhen, Guangdong 518118 (CN); LIAO, Yanhua, Shenzhen, Guangdong 518118 (CN); XIE, Changchun, Shenzhen, Guangdong 518118 (CN); XU, Cheng, Shenzhen, Guangdong 518118 (CN); LIU, Tengyong, Shenzhen, Guangdong 518118 (CN)
(74) Representative: Mathys & Squire
(86) International application number: PCT/CN2024/084839
(87) International publication number: WO 2024/217255

(57) **Abstract**

A vehicle, comprising: a rear crossbeam (5) that can provide connection and support effects in the width direction of the vehicle; a left rear longitudinal beam that comprises a left rear longitudinal beam front section (1) and a left rear longitudinal beam rear section (3), the left rear longitudinal beam rear section (3) being connected to the left rear longitudinal beam front section (1) to form the detachably connected left rear longitudinal beam, thereby facilitating the assembly and disassembly of the vehicle, and the left rear longitudinal beam front section (1) being connected to the left end of the rear crossbeam (5) so as to facilitate force transmission from the left rear longitudinal beam to the rear crossbeam (5); and a right rear longitudinal beam that comprises a right rear longitudinal beam front section (2) and a right rear longitudinal beam rear section (4), the right rear longitudinal beam rear section (4) being connected to the right rear longitudinal beam front section (2) to form the detachably connected right rear longitudinal beam, thereby facilitating the assembly and disassembly of the vehicle, and the right rear longitudinal beam front section (2) being connected to the right end of the rear crossbeam (5) so as to facilitate force transmission of the vehicle in multiple directions.

## Description

### CROSS-REFERENCE TO RELATED DISCLOSURES

The present disclosure claims priority to Chinese Patent Disclosure No. 202310460238.1, filed by BYD COMPANY LIMITED, on April 18, 2023, titled "VEHICLE", the entire content of which is incorporated herein by reference.

### FIELD

The present disclosure relates to the technical field of vehicle body structures, and in particular, to a vehicle.

### BACKGROUND

In the prior art, the body structures of sports cars are typically made of traditional metallic materials. Due to the reduced dimensions of the overall body structure, the structural size of the rear portion of the body is further downsized, which reduces the collision strength of the body structure and affects the driving safety of the sports cars.

### SUMMARY

The present disclosure is intended to solve at least one of the technical problems in the related art to a certain extent.

To this end, this disclosure proposes a vehicle.

A vehicle according to an embodiment of this disclosure includes: a rear crossbeam; a left rear longitudinal beam, the left rear longitudinal beam includes a left rear longitudinal beam front section and a left rear longitudinal beam rear section, the left rear longitudinal beam rear section is connected to the left rear longitudinal beam front section, and the left rear longitudinal beam front section is connected to a left end of the rear crossbeam; a right rear longitudinal beam, the right rear longitudinal beam includes a right rear longitudinal beam front section and a right rear longitudinal beam rear section, the right rear longitudinal beam rear section is connected to the right rear longitudinal beam front section, and the right rear longitudinal beam front section is connected to a right end of the rear crossbeam.

Therefore, the cooperation of the rear crossbeam, the left rear longitudinal beam, and the right rear longitudinal beam can bear the longitudinal and transverse force transmission, thereby improving the structural strength and impact resistance of the vehicle.

The additional aspects and advantages of the present disclosure will be partly described below, and will in part become evident from the following description, or will be understood through the practice of the present disclosure.

### BRIEF DESCRIPTION OF THE DRAWINGS

FIG. 1 is a schematic diagram of a vehicle provided by an embodiment of the present disclosure;
FIG. 2 is a first partial schematic diagram of a vehicle provided by an embodiment of the present disclosure;
FIG. 3 is a schematic diagram of the cooperation between a π-shaped rear frame assembly, a rear wall panel assembly, and a side wall assembly of a vehicle provided by an embodiment of the present disclosure;
FIG. 4 is a partial schematic diagram of a side wall assembly of a vehicle provided by an embodiment of the present disclosure;
FIG. 5 is a first schematic diagram of the cooperation between a π-shaped rear frame assembly and a side wall assembly of a vehicle provided by an embodiment of the present disclosure;
FIG. 6 is a second schematic diagram of the cooperation between a π-shaped rear frame assembly and a side wall assembly of a vehicle provided by an embodiment of the present disclosure;
FIG. 7 is a second partial schematic diagram of a vehicle provided by an embodiment of the present disclosure;
FIG. 8 is a cross-sectional view at A-A in FIG. 7;

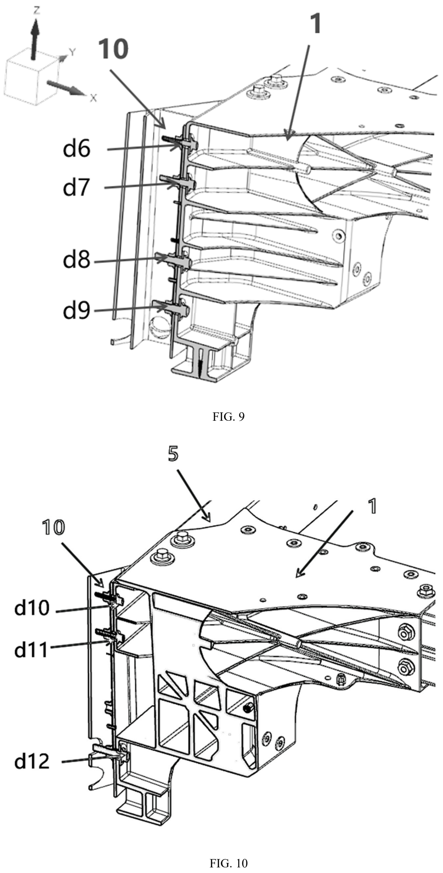

FIG. 9 is a cross-sectional view at B-B in FIG. 7;
FIG. 10 is a cross-sectional view at C-C in FIG. 7;
FIG. 11 is a schematic diagram of a left rear longitudinal beam front section of a vehicle provided by an embodiment of the present disclosure;
FIG. 12 is a cross-sectional view at D-D in FIG. 11;
FIG. 13 is a cross-sectional view at E-E in FIG. 11;
FIG. 14 is a cross-sectional view at F-F in FIG. 11.

### DETAILED DESCRIPTION

The following provides a detailed description of the embodiments of the present disclosure, along with examples of these embodiments shown in the accompanying drawings. In which the identical or similar reference numerals denote identical or similar components, or components having identical or similar functions. The embodiments described below with reference to the drawings are merely exemplary, are intended to explain the present disclosure and cannot be construed as a limitation on the present disclosure.

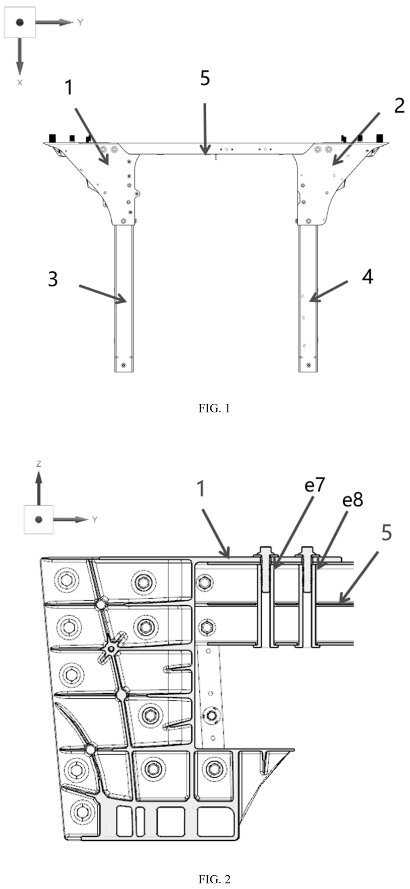

With reference to FIGS. 1 to 3, the embodiment of the present disclosure provides a vehicle. The vehicle comprises: a rear crossbeam 5 that can provide connection and support effects in the width direction of the vehicle; a left rear longitudinal beam, as shown in FIG. 1, the left rear longitudinal beam comprises a left rear longitudinal beam front section 1 and a left rear longitudinal beam rear section 3, the left rear longitudinal beam rear section 3 is connected to the left rear longitudinal beam front section 1 to form the detachably connected left rear longitudinal beam, thereby facilitating the assembly and disassembly of the vehicle, and the left rear longitudinal beam front section 1 is connected to the left end of the rear crossbeam 5 so as to facilitate force transmission from the left rear longitudinal beam to the rear crossbeam 5.

A right rear longitudinal beam, as shown in FIG. 1, the right rear longitudinal beam comprising a right rear longitudinal beam front section 2 and a right rear longitudinal beam rear section 4, the right rear longitudinal beam rear section 4 being connected to the right rear longitudinal beam front section 2 to form the detachably connected right rear longitudinal beam, thereby facilitating the assembly and disassembly of the vehicle, and the right rear longitudinal beam front section 2 being connected to the right end of the rear crossbeam 5 so as to facilitate force transmission of the vehicle in multiple directions.

The vehicle has a length direction, a width direction, and a height direction. The length direction of the vehicle may correspond to the X direction in the figures, the width direction of the vehicle may correspond to the Y direction in the figures, and the height direction of the vehicle may correspond to the Z direction in the figures.

The cooperation formed by the rear crossbeam 5, the left rear longitudinal beam, and the right rear longitudinal beam can bear the force transmission in the X direction and the Y direction in the whole vehicle structure, so as to complete the effective force transmission and energy absorption under both rear collision and side collision conditions of the vehicle, reduce the deformation of the vehicle occupant compartment, and improve the structural strength and impact resistance of the vehicle.

The vehicle provided in the embodiment of the present disclosure comprises a rear crossbeam 5, a left rear longitudinal beam, and a right rear longitudinal beam. The left rear longitudinal beam comprises a left rear longitudinal beam front section 1 and a left rear longitudinal beam rear section 3, the left rear longitudinal beam rear section 3 is connected to the left rear longitudinal beam front section 1, and the left rear longitudinal beam front section 1 is connected to the left end of the rear crossbeam 5. The right rear longitudinal beam comprises a right rear longitudinal beam front section 2 and a right rear longitudinal beam rear section 4, the right rear longitudinal beam rear section 4 is connected to the right rear longitudinal beam front section 2, and the right rear longitudinal beam front section 2 is connected to the right end of the rear crossbeam 5. This structure is designed to bear longitudinal and transverse force transmission, enabling effective force transmission and energy absorption under both rear collision and side collision conditions of the vehicle, thus improving the structural strength and impact resistance of the vehicle.

At least two cavities are formed inside the left rear longitudinal beam rear section 3, and one cavity is formed in the left rear longitudinal beam front section 1. The left rear longitudinal beam rear section 3 is inserted into the cavity of the left rear longitudinal beam front section 1.

When the left rear longitudinal beam rear section 3 is in plug-in fit with the left rear longitudinal beam front section 1, it not only simplifies the connection process between them but also enhances the overall structural compactness and strength of the left rear longitudinal beam.

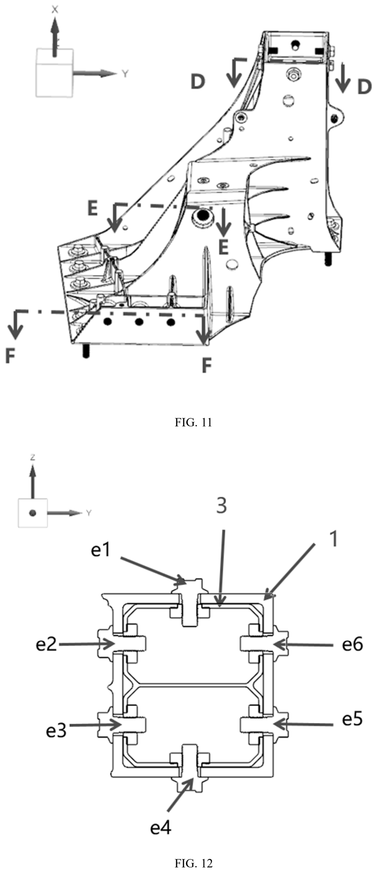

As shown in FIG. 12, the cross-section of the left rear longitudinal beam rear section 3 is rectangular with a central horizontal divider and arranged in a 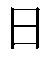 -shaped configuration, the cross-section of the end of the left rear longitudinal beam front section 1 adjacent to the left rear longitudinal beam rear section 3 is rectangular and arranged in a 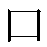 -shaped configuration, and the left rear longitudinal beam rear section 3 is inserted into the rectangular, 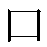 -shaped inner cavity of the left rear longitudinal beam front section 1.

The cross-section of the left rear longitudinal beam rear section 3 can be rectangular with a central horizontal divider and arranged in a 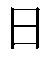 -shaped configuration only at the end adjacent to the left rear longitudinal beam front section 1, or the cross-section of the entire left rear longitudinal beam rear section 3 can be rectangular with a central horizontal divider and arranged in a 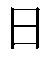 -shaped configuration in the longitudinal direction, so as to enhance the structural strength of the left rear longitudinal beam. The width of the left rear longitudinal beam front section 1 may gradually increase from the rear end to the front end; the cross-section of the rear end of the left rear longitudinal beam front section 1 is rectangular and arranged in a 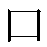 -shaped configuration, and the cross-section of the front end of the left rear longitudinal beam front section 1 can be grid-shaped, so as to enhance the connection strength between the left rear longitudinal beam and the rear crossbeam 5.

When the left rear longitudinal beam rear section 3 is inserted into the rectangular, 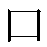 -shaped inner cavity of the left rear longitudinal beam front section 1, a limiting plate can be arranged in the rectangular, 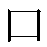 -shaped inner cavity of the left rear longitudinal beam front section 1, and the left rear longitudinal beam rear section 3 abuts against this limiting plate, so as to ensure the assembly accuracy and stability between the left rear longitudinal beam rear section 3 and the left rear longitudinal beam front section 1.

In addition, the cross-section of the right rear longitudinal beam rear section 4 can also be rectangular with a central horizontal divider and arranged in a 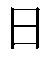 -shaped configuration, the cross-section of the end of the right rear longitudinal beam front section 2 adjacent to the right rear longitudinal beam rear section 4 is rectangular and arranged in a 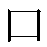 -shaped configuration, and the right rear longitudinal beam rear section 4 is inserted into the rectangular, 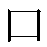 -shaped inner cavity of the right rear longitudinal beam front section 2.

In one embodiment, the vehicle further comprises a first bolt 'e'. A nut is arranged on the left rear longitudinal beam rear section 3, a through hole is arranged on the left rear longitudinal beam front section 1 at a position corresponding to the nut, and the first bolt 'e' extends through the through hole and is in threaded engagement with the nut.

The left rear longitudinal beam rear section 3 and the left rear longitudinal beam front section 1 are connected by nested four-sided bolts. The left rear longitudinal beam rear section 3 is provided with first bolts e in the form of clinched nuts inside the cavity, with two on each of the left and right sides, and one on each of the upper and lower sides. The first bolts e comprise bolts e1, e2, e3, e4, e5, and e6, so as to ensure the connection strength between the left rear longitudinal beam rear section 3 and the left rear longitudinal beam front section 1.

In addition, a nut may also be arranged on the right rear longitudinal beam rear section 4, and a through hole is arranged on the right rear longitudinal beam front section 2 at a position corresponding to the nut. The first bolt e can pass through the through hole and be in threaded engagement with the nut.

The right rear longitudinal beam front section 2 and the left rear longitudinal beam front section 1 are symmetrically arranged in the width direction of the vehicle, and the right rear longitudinal beam rear section 4 and the left rear longitudinal beam rear section 3 are symmetrically arranged in the width direction of the vehicle.

The right rear longitudinal beam front section 2 and the left rear longitudinal beam front section 1 are symmetrically arranged on the left and right sides, and the right rear longitudinal beam rear section 4 and the left rear longitudinal beam rear section 3 may also be symmetrically arranged on the left and right sides.

For example, at least two cavities are formed inside the right rear longitudinal beam rear section 4, one cavity is formed in the right rear longitudinal beam front section 2, and the right rear longitudinal beam rear section 4 is inserted into the cavity of the right rear longitudinal beam front section 2. In one embodiment, the cross-section of the right rear longitudinal beam rear section 4 is rectangular with a central horizontal divider and arranged in a 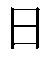 -shaped configuration, the cross-section of the end of the right rear longitudinal beam front section 2 adjacent to the right rear longitudinal beam rear section 4 is rectangular and arranged in a 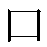 -shaped configuration, and the right rear longitudinal beam rear section 4 is inserted into the rectangular, 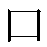 -shaped inner cavity of the right rear longitudinal beam front section 2.

With reference to FIG. 1, the rear crossbeam 5, the left rear longitudinal beam, and the right rear longitudinal beam form a π-shaped rear frame assembly 6.

The π-shaped rear frame assembly 6 formed by the rear crossbeam 5, the left rear longitudinal beam, and the right rear longitudinal beam can bear the force transmission in the X direction and the Y direction in the whole vehicle structure, so as to complete the effective force transmission and energy absorption under both rear collision and side collision conditions of the vehicle, reduce the deformation of the vehicle occupant compartment, and improve the structural strength and impact resistance of the vehicle.

With reference to FIG. 2, in the height direction of the vehicle, through threaded sleeves are arranged at both ends of the rear crossbeam 5, and the left rear longitudinal beam front section 1 is connected to the rear crossbeam 5 through the cooperation of a second bolt and the threaded sleeve.

Two threaded sleeves may be pre-welded at both ends of the rear crossbeam 5, and the two threaded sleeves are namely threaded sleeve e7 and threaded sleeve e8. The rear longitudinal beam front section 1 is screwed to the rear crossbeam 5 in the Z-direction through the threaded engagement between the second bolt and the threaded sleeves; the mutually mating surfaces between the left rear longitudinal beam front section 1 and the rear crossbeam 5 may be bonded with adhesive to enhance the connection strength between the front section 1 of the left rear longitudinal beam and the rear crossbeam 5.

In addition, in the height direction of the vehicle, the right rear longitudinal beam front section 2 may also be connected to the rear crossbeam 5 through the cooperation of a second bolt and the threaded sleeves, and the mutually mating surfaces between the right rear longitudinal beam front section 2 and the rear crossbeam 5 may be bonded with adhesive.

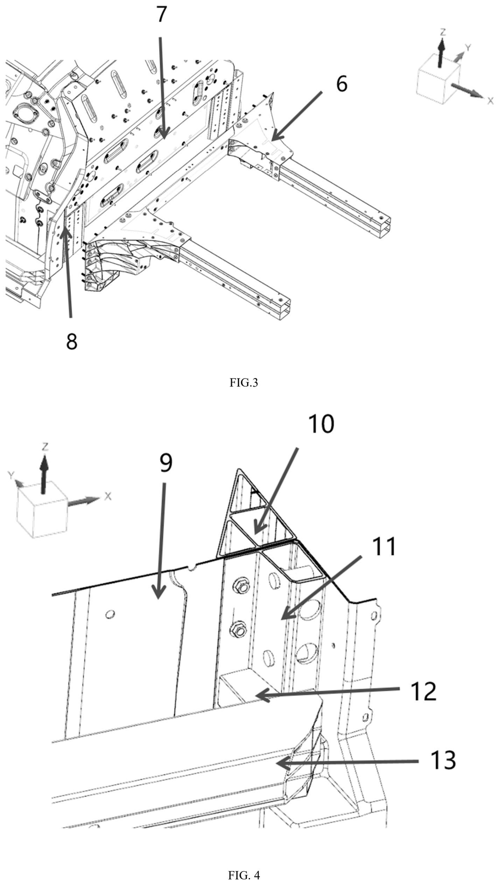

With reference to FIGS. 4 to 6, the vehicle further comprises a side wall inner panel 9. The rear end of the side wall inner panel 9 is bent to form an outer corner area and an inner corner area. An outer connecting piece 10 is disposed in the outer corner area, and an inner connecting piece 11 is arranged in the inner corner area;

The outer connecting piece 10 has a first connecting wall and a second connecting wall, the first connecting wall is connected to the side wall inner panel 9, and the second connecting wall is connected to the left rear longitudinal beam front section 1;

The inner connecting piece 11 is connected to the left rear longitudinal beam front section 1 through the side wall inner panel 9.

The outer connecting piece 10 is exposed from the rear wall panel assembly 7 and the side wall assembly 8, while the inner connecting piece 11 is located between the side wall inner panel 9 and the side wall outer panel. A layer of the side wall inner panel 9 is sandwiched between the outer connecting piece 10 and the inner connecting piece 11 to form a portion of the side wall assembly 8. The outer connecting piece 10 and the side wall inner panel 9 are connected through two rows of bolts, one row of bolts comprise bolts b1, b2, and b3, and the other row of bolts comprise bolts b4, b5, and b6. The inner connecting piece 11 and the side wall inner panel 9 can be connected by using bolts b4, b5 and b6.

Meanwhile, the outer connecting piece 10 and the inner connecting piece 11 may also be bonded to the side wall inner panel 9 to enhance the connection strength between components. The outer connecting piece 10 and the inner connecting piece 11 serve as intermediate parts; the outer connecting piece 10 and the inner connecting piece 11 can realize a stable connection between the left rear longitudinal beam front section 1 and surrounding components such as the side wall inner panel 9 and the sill beam, so as to improve the integrity of the vehicle.

The aforementioned outer connecting piece 10 and inner connecting piece 11 represent the connecting members on the left side of the vehicle. The right side of the vehicle is provided with corresponding connectors that are symmetrically arranged with respect to the outer connecting piece 10 and inner connecting piece 11.

In addition, the accompanying drawings of the present disclosure show a left-right symmetric structure of the vehicle. In cases where the vehicle comprises left-right symmetric components but the specification does not specifically distinguish between left and right, the referenced component refers to the structure on one side of the vehicle, and the component on the other side is symmetric to this one.

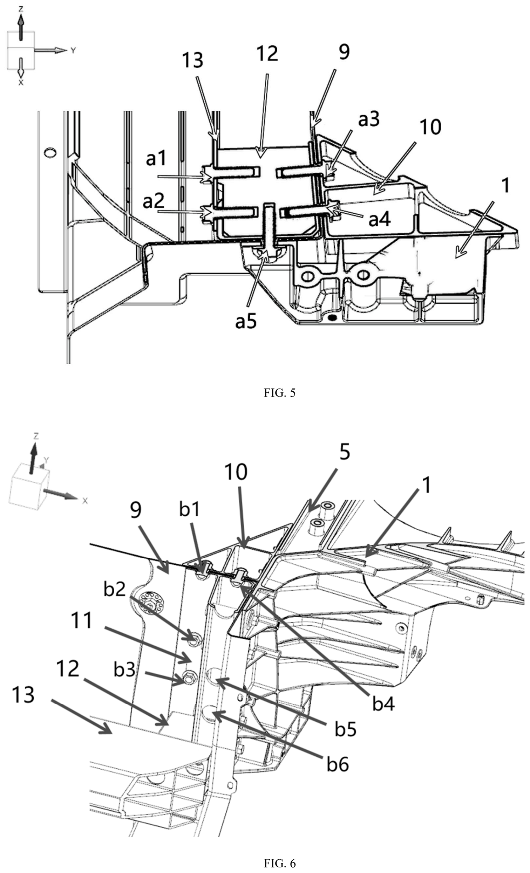

With reference to FIGS. 4 and 5, the vehicle further comprises a sill beam 13. A connecting block 12 is connected to the bottom end of the inner connecting piece 11, and the sill beam 13 is connected to the connecting block 12.

The lower portion of the inner connecting piece 11 is supported by the connecting block 12, and the inner connecting piece 11 is integrated with the connecting block 12 through arc welding. As shown in FIG. 5, two M10 wire thread inserts are embedded on the left and right sides of the connecting block 12 respectively, and these wire thread inserts comprise wire thread inserts a1, a2, a3, and a4. Through the wire thread inserts, the left side of the connecting block 12 is connected to the sill beam 13, and the right side of the connecting block 12 is connected to the side wall inner panel 9 and the outer connecting piece 10.

An M10 wire thread insert a5 is embedded in the rear portion of the connecting block 12, and the connecting block 12 is connected to the left rear longitudinal beam front section 1 through the wire thread insert a5. This enables the connecting block 12 to not only form a Y-direction connection with the sill beam 13 but also form an X-direction connection with the π-shaped rear frame assembly 6, thereby forming a continuous force transmission path during rear and side collisions of the vehicle, and reducing the deformation of the vehicle occupant compartment.

With reference to FIGS. 4 and 5, in the height direction of the vehicle, the cross-section of the outer connecting piece 10 is a right-angled triangle, and the first connecting wall and the second connecting wall are the two right-angled sides of the triangle.

A steel strip nut plate structure is arranged inside the profile of the outer connecting piece 10. The first connecting wall and the second connecting wall can provide screw connection points in the X-direction and Y-direction through the steel strip nut plate structure, so as to realize the connection between the side wall inner panel 9 and the left rear longitudinal beam front section 1 through the outer connecting piece 10.

FIG. 6 is a schematic diagram of the connection between the outer side of the left rear longitudinal beam front section 1 and the inner connecting piece 11. There are four X-direction connection points between the outer side of the left rear longitudinal beam front section 1 and the inner connecting piece 11. From top to bottom, the connection points comprise d1, d2, d3, and d4. The thread is provided by the pre-welded thread sleeves on the inner connecting piece 11. There is one X-direction connection point d5 between the outer side of the left rear longitudinal beam front section 1 and the connecting block 12, and the thread is provided by the pre-embedded wire thread inserts on the connecting block 12, so as to realize the connection between the left rear longitudinal beam front section 1 and the inner connecting piece 11 and the connecting block 12 through the side wall inner panel 9.

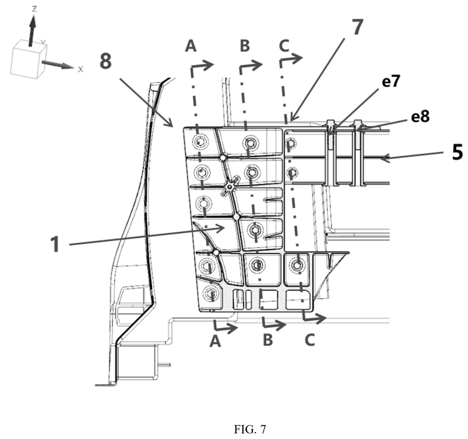

As shown in FIG. 7, there are also four X-direction connection points between the inner side of the left rear longitudinal beam front section 1 and the outer connecting piece 10. From top to bottom, the connection points specifically comprise d6, d7, d8, and d9. The thread is provided by the pre-installed steel strip nut plate on the outer connecting piece 10, so as to realize the direct connection between the left rear longitudinal beam front section 1 and the outer connecting piece 10.

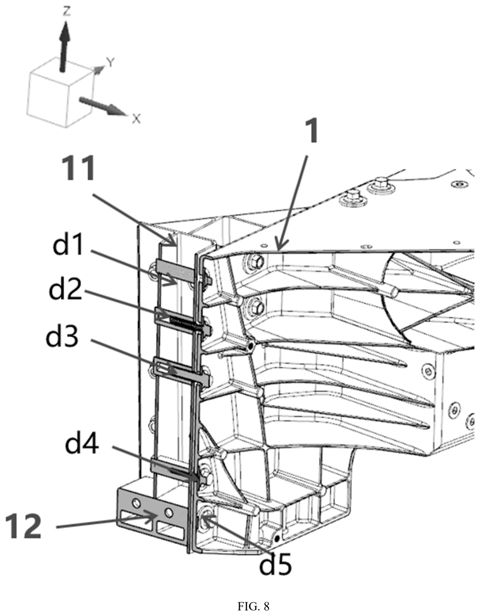

As shown in FIG. 8, there are two X-direction connection points between the upper portion of the inner side of the outer connecting piece 10 and the rear crossbeam 5, the connection points comprise d10 and d11, and there is one X-direction connection point d12 between the lower portion of the outer connecting piece 10 and the left rear longitudinal beam front section 1. Therefore, there are twelve X-direction screw connection points between one side of the π-shaped rear frame assembly 6 and the side wall assembly 8. In addition, in the area avoiding the screw connection points, adhesive can be added between the π-shaped rear frame assembly 6 and the side wall assembly 8 to enhance the reliability and durability of the connection.

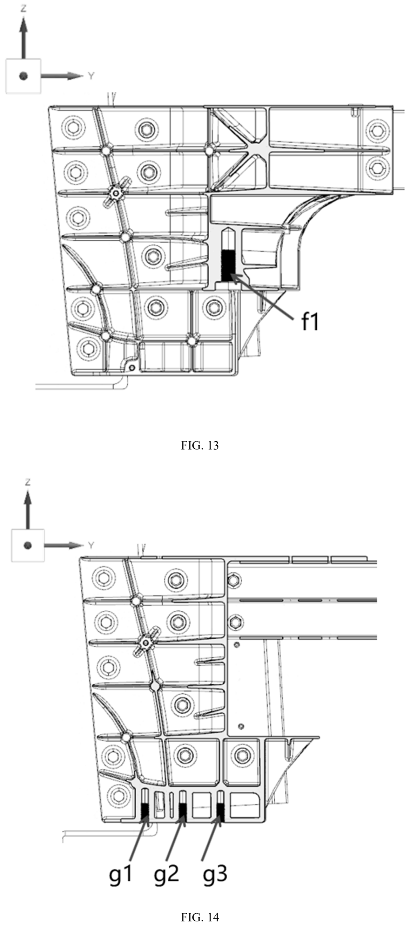

With reference to FIG. 13, the bottom middle section of the left rear longitudinal beam front section 1 is used for connecting the subframe.

FIG. 13 is a cross-sectional view of the middle section of the left rear longitudinal beam front section 1. The bottom middle section of the left rear longitudinal beam front section 1 can provide mounting points for the front mounting points of the rear subframe. The rear subframe is connected to the left rear longitudinal beam front section 1 through threaded engagement, and the thread is provided by the wire thread insert f1 embedded in the left rear longitudinal beam front section 1. The height of the thread structure is determined by the height of the subframe mounting points and the length of the mounting bolts to ensure the stability of the subframe installation.

The bottom front section of the left rear longitudinal beam front section 1 is used for the battery pack.

FIG. 14 is a cross-sectional view of the front section of the left rear longitudinal beam front section 1. The bottom front section of the left rear longitudinal beam front section 1 can provide mounting points for the rear portion of the battery pack. The rear portion of the battery pack is connected to the left rear longitudinal beam front section 1 through threaded engagement. There are three mounting points in total in the bottom front section of the left rear longitudinal beam front section 1, and the threads are also provided by the wire thread inserts g1, g2 and g3 embedded in the left rear longitudinal beam front section 1. By connecting the battery pack, subframe and the vehicle body into an integral structure, in one aspect, when the vehicle is subjected to collision loads, the vehicle body, battery pack and subframe can bear forces synergistically as a whole, thereby reducing the local force on the occupant compartment and avoiding large deformation of the occupant compartment; in another aspect, it can improve the torsional stiffness of the entire vehicle body and enhance the driving safety of the vehicle.

The π-shaped rear frame assembly 6 is connected to the rear wall panel assembly 7 and the side wall assembly 8 through multiple X-direction bolts combined with gluing, enabling the vehicle to bear the force transmission in the X direction and the Y direction in the whole vehicle structure. This realizes the effective force transmission and energy absorption under both rear collision and side collision conditions of the vehicle, thereby reducing the deformation of the occupant compartment.

In the present disclosure, unless otherwise clearly stipulated and defined, the first feature being "on" or "under" the second feature may mean that the first and second features are in direct contact, or that the first and second features are in indirect contact through an intermediate medium. Moreover, the first feature being "above", "over", or "on top of" the second feature may mean that the first feature is directly above or obliquely above the second feature, or merely indicates that the horizontal height of the first feature is higher than that of the second feature. The first feature being "below", "under", or "beneath" the second feature may mean that the first feature is directly below or obliquely below the second feature, or merely indicates that the horizontal height of the first feature is lower than that of the second feature.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. In addition, those skilled in the art may combine the different embodiments or examples and the features of the different embodiments or examples described in this specification without contradiction.

Although the embodiments of the present disclosure have been shown and described above, it will be understood that the above embodiments are exemplary and will not be understood as limitations on the present disclosure. Those skilled in the art can change, modify, replace and modify the above embodiments within the scope of the present disclosure.

## Claims

1. A vehicle comprising:
a rear crossbeam;
a left rear longitudinal beam, the left rear longitudinal beam comprising a left rear longitudinal beam front section and a left rear longitudinal beam rear section, the left rear longitudinal beam rear section being connected to the left rear longitudinal beam front section, and the left rear longitudinal beam front section being connected to a left end of the rear crossbeam;
a right rear longitudinal beam, the right rear longitudinal beam comprising a right rear longitudinal beam front section and a right rear longitudinal beam rear section, the right rear longitudinal beam rear section being connected to the right rear longitudinal beam front section, and the right rear longitudinal beam front section being connected to a right end of the rear crossbeam.

2. The vehicle according to claim 1, wherein at least two cavities are formed inside the left rear longitudinal beam rear section, one cavity is formed in the left rear longitudinal beam front section, and the left rear longitudinal beam rear section is inserted into the cavity of the left rear longitudinal beam front section.

3. The vehicle according to claim 2, wherein a cross-section of the left rear longitudinal beam rear section is rectangular with a central horizontal partition and arranged in a 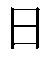 -shaped configuration, a cross-section of the end of the left rear longitudinal beam front section adjacent to the left rear longitudinal beam rear section is rectangular and arranged in a 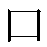 -shaped configuration, and the left rear longitudinal beam rear section is inserted into the rectangular, 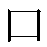 -shaped inner cavity of the left rear longitudinal beam front section.

4. The vehicle according to claim 3, wherein further comprising a first bolt, a nut is arranged on the left rear longitudinal beam rear section, a through hole is arranged on the left rear longitudinal beam front section at a position corresponding to the nut, and the first bolt extends through the through hole and is in threaded engagement with the nut.

5. The vehicle according to any one of claims 2 to 4, wherein the right rear longitudinal beam front section and the left rear longitudinal beam front section are symmetrically arranged in a width direction of the vehicle, and the right rear longitudinal beam rear section and the left rear longitudinal beam rear section are symmetrically arranged in the width direction of the vehicle.

6. The vehicle according to any one of claims 1 to 5, wherein the rear crossbeam, the left rear longitudinal beam and the right rear longitudinal beam form a π-shaped rear frame assembly.

7. The vehicle according to any one of claims 1 to 6, wherein in a height direction of the vehicle, through threaded sleeves are arranged at both ends of the rear crossbeam, and the left rear longitudinal beam front section is connected to the rear crossbeam through the cooperation of a second bolt and the threaded sleeve.

8. The vehicle according to any one of claims 1 to 7, wherein further comprising a side wall inner panel, a rear end of the side wall inner panel is bent to form an outer corner area and an inner corner area, an outer connecting piece is arranged in the outer corner area, and an inner connecting piece is arranged in the inner corner area;
the outer connecting piece has a first connecting wall and a second connecting wall, the first connecting wall is connected to the side wall inner panel, and the second connecting wall is connected to the left rear longitudinal beam front section;
the inner connecting piece is connected to the left rear longitudinal beam front section through the side wall inner panel.

9. The vehicle according to claim 8, further comprising a sill beam, wherein a connecting block is connected to a bottom end of the inner connecting piece, and the sill beam is connected to the connecting block.

10. The vehicle according to claim 8, wherein in the height direction of the vehicle, a cross-section of the outer connecting piece is in a right-angled triangle, and the first connecting wall and the second connecting wall are the two right-angled sides of the triangle.

11. The vehicle according to any one of claims 1 to 10, wherein a bottom middle section of the left rear longitudinal beam front section being used for connecting a subframe.

12. The vehicle according to any one of claims 1 to 11, wherein a bottom front section of the left rear longitudinal beam front section being used for a battery pack.
